(19) Europäisches Patentamt
European Patent Office
Office européen des brevets

(11) Publication number: **0 133 641**
**A1**

(12) # EUROPEAN PATENT APPLICATION

(21) Application number: 84106956.0

(22) Date of filing: 18.06.84

(51) Int. Cl.[4]: C 08 L 67/02
C 08 L 71/04, C 08 K 5/10
C 08 K 5/52, C 08 L 69/00
C 08 L 53/02

(30) Priority: 28.06.83 US 508553

(43) Date of publication of application:
06.03.85 Bulletin 85/10

(84) Designated Contracting States:
DE FR GB IT NL

(71) Applicant: GENERAL ELECTRIC COMPANY
1 River Road
Schenectady New York 12305(US)

(72) Inventor: Betts, Joseph Elwood
44 Park Lane
Wetsport Connecticut 06880(US)

(72) Inventor: Abolins, Visvaldis
15 Haddington Lane
Delmar New York 12504(US)

(72) Inventor: Holub, Fred Frank
2263 Preisman Drive
Schenectady New York 12309(US)

(74) Representative: Catherine, Alain et al,
General Electric Frauenstrasse 32
D-8000 München 5(DE)

(54) **Flame retardant thermoplastic polyester compositions.**

(57) Thermoplastic compositions suitable for manufacture into flame retardant articles of various shapes and sizes are described. The compositions are admixtures of a polyester resin and a flame retardant agent comprised of a polyphenylene ether resin, an organic phosphate and a stable brominated material.

EP 0 133 641 A1

Croydon Printing Company Ltd

# FLAME RETARDANT THERMOPLASTIC POLYESTER COMPOSITIONS

## BACKGROUND OF THE INVENTION

The addition of flame retardant agents to normally flammable thermoplastic polymers to render the latter more flame resistant is well known in the plastics art. One such class of materials comprises flame retardant blends of polyphenylene ether resin and styrenic polymers, many types of which are described in the patent literature. William Haaf, in U.S. Patent No. 3,639,506, discloses the usefulness of aromatic phosphate compounds and aromatic halogen compounds together as a flame retardant agent for compositions of polyphenylene ether resin and styrene resin. Glenn Cooper and Arthur Katchman in U.S. Patent No. 4,101,503 describe impact modified polyphenylene ether resin compositions, a preferred feature of which is the inclusion of a flame retardant agent which can be a halogenated organic compound in admixture with a phosphorus compound. Compositions of polyphenylene ether and styrenic polymers containing a flame retardant combination of an aromatic phosphate and an aromatic halogen compound are also disclosed in U.S. Patent No. 4,191,685 (to Haaf). Robert Axelrod in U.S. Patent No. 4,154,775, discloses flame retardant compositions of polyphenylene ether resin, polystyrene and cyclic phosphates having excellent appearance and physical properties in molded forms.

Another class of flame retardant polymeric materials comprises the polyester resins, and particularly poly(alkylene terephthalate) resins and blends of these resins modified with various fire retardant additives. Compositions of this kind are disclosed in the patent literature, including U.S. Patent Nos. 3,915,926 (Wambach); 4,124,561 (Phipps, Jr., et al.); 4,220,735 (Dieck, et al.); 4,257,937 (Cohen, et al.); and 4,344,878 (Dolce). Among the fire retardant additives taught as suitable for the

polyester resins are aromatic phosphate compounds; see, for example, U.S. 4,344,878.

It has been proposed by Abolins and Holub in U.S. Patent No. 4,013,613 that poly(alkylene terephthalates) can be admixed with polyphenylene ethers and the mixture can be made flame retardant if desired by the addition of a conventional agent or agents for that purpose.

SUMMARY OF THE INVENTION

The invention comprises flame retardant blend compositions of (a) a polyester resin, and (b) a flame retardant system comprised of: (i) a polyphenylene ether resin, (ii) an organic phosphate, and (iii) a stable brominated material. The polyphenylene ether resin component functions to confer better flame resistance in comparison with the corresponding composition without this component present. Other ingredients can optionally be included to enhance the properties.

The compositions of this invention are useful for the same purposes generally as conventional polyester resins and blends of such resins. Thus, for example, they can be extruded, calendared, molded or shaped in other ways into various articles for industrial or household use.

DESCRIPTION OF THE INVENTION

The polyesters which are employed as component (a) in the present compositions are relatively high molecular weight essentially linear, normally flammable thermoplastic polymers. Preferably, they are polymeric glycol esters of terephthalic acid and isophthalic acid. These polymers are available commercially or can be prepared by known techniques, such as by the alcoholysis of esters of the phthalic acid with a glycol and subsequent polymerization, by heating glycols with the free acids or with halide derivatives thereof, and similar processes. Such polymers and methods of their preparation are described further by Whinfield, et al., in U.S. Patent No. 2,465,319 and by Pengilly in U.S. Patent No. 3,047,539, and elsewhere.

Preferred polyesters are of the family consisting of high molecular weight, polymeric glycol terephthalates or isophthalates having repeating units of the formula

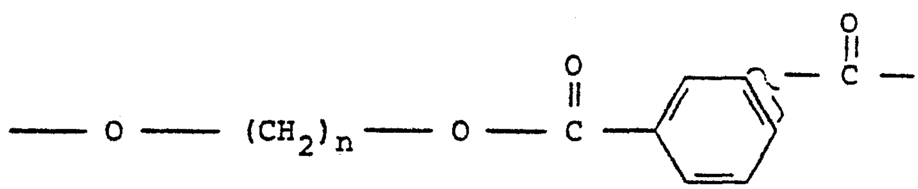

where n is a whole number from two to ten, and more usually from two to four, and mixtures of such esters, including copolyesters of terephthalic and isophthalic acids of up to 30 mol percent isophthalic units.

Especially preferred polyesters are poly(ethylene terephthalate) and poly(1,4-butylene terephthalate). Special mention is made of the latter, which crystallizes at a good rate and may be used for injection molding without the need for nucleating agents or long molding cycles.

Especially favored when high melt strength is important are branched high melt viscosity poly(1,4-butylene terephthalate) resins which include small amounts, for example, up to 5 mol percent based on the terephthalate

units, of a branching component containing at least three ester forming groups. The branching component can be one which provides branching in the acid unit portion of the polyester, or in the glycol unit portion, or it can be a hybrid. Illustrative of such branching components are tri- or tetracarboxylic acids, such as trimesic acid, pyromellitic acid, and lower alkyl esters thereof, and the like, or preferably, polyols, and especially preferably, tetrols, such as pentaerythritol, triols, such as trimethylolpropane, or dihydroxy carboxylic acids and hydroxydicarboxylic acids and derivatives, such as dimethyl hydroxyterephthalate, and the like.

The branched poly(1,4-butylene terephthalate) resins and their preparation are described in U.S. Patent No. 3,953,404 (Borman).

Illustratively, the high molecular weight polyesters useful in the practice of this invention have an intrinsic viscosity of at least about 0.2 deciliters per gram, and more usually from about 0.4 to 1.5 deciliters per gram as measured in solution in ortho-chlorophenol or a 60/40 phenol/tetrachloroethane mixture at 25° to 30°C.

Also useful are copolyesters, such as segmented copolyesters having a multiplicity of recurring ether-ester and/or ester units as described by William Witsiepe in U.S. Patent Nos. 3,651,014; 3,763,109; and 3,766,146. Useful materials are available from E.I. duPont de Nemours and Co. under the trade designation "Hytrel" resins, for example, Hytrel 4055 and Hytrel 5555.

The flame retardant agent portion of the composition is composed of an effective amount of a flame retardant organic phosphate, an effective amount of a stable brominated material which serves as a co-flame retardant for the organic phosphate, and an amount of polyphenylene ether resin.

The polyphenylene ether resin, component (b)(i) of the flame retardant, is preferably a homo- or copolymer having units of the formula

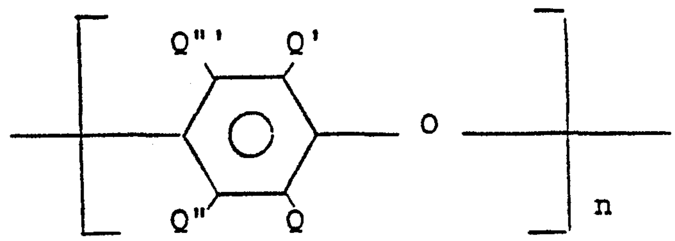

wherein Q, Q', Q" and Q"', are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer at least about 20, and preferably at least 50.

In general, the polyphenylene ether resins are self-condensation products of monohydric monocyclic phenols produced by reacting the phenols with oxygen in the presence of complex metal catalysts, with molecular weight being controlled by reaction time, longer times providing a higher average number of repeating units. Particular procedures are known to those skilled in the art and are described in the patent literature, including U.S. Patent Nos. 3,306,874 and 3,306,875 (to Allan Hay), and U.S. Patent Nos. 3,257,357 and 3,257,358 (to Gelu Stamatoff).

Illustrative polymers which can be produced by such procedures and which are within the above general formula are: poly(2,6-dilauryl-1,4-phenylene)ether; poly-(2,6-diphenyl-1,4-phenylene)ether; poly(2,6-dimethoxy-1,4-phenylene)ether; poly(2,6-diethoxy-1,4-phenylene)ether; poly(2-methoxy-6-ethoxy-1,4-phenylene)ether; poly(2-ethyl-6-stearyloxy-1,4-phenylene)ether; poly(2,6-dichloro-1,4-phenylene)ether; poly(2-methyl-6-phenyl-1,4-phenylene) ether; poly(2,6-dibenzyl-1,4-phenylene)ether; poly(2-ethoxy-1,4-phenylene)ether; poly(2-chloro-1,4-phenylene) ether; poly(2,6-dibromo-1,4-phenylene)ether; and the like.

Examples of other polyphenylene ethers corresponding to the above formula can be found in the above referenced patents of Hay and Stamatoff.

Also included are polyphenylene ether copolymers, such as copolymers of 2,6-dimethylphenol with other phenols, for example, with 2,3,6-trimethylphenol or 2-methyl-6-butylphenol, etc.

For purposes of the present invention, an especially preferred family of polyphenylene ethers include those having alkyl substitution in the two positions ortho to the oxygen ether atom, i.e., those of the above formula wherein Q and Q' are alkyl, most preferably having from 1 to 4 carbon atoms. Illustrative members of this class are: poly(2,6-dimethyl-1,4-phenylene)ether; poly(2,6-diethyl-1,4-phenylene)ether; poly(2-methyl-6-ethyl-1,4-phenylene)ether; poly(2-methyl-6-propyl-1,4-phenylene)ether; poly(2,6-dipropyl-1,4-phenylene)ether; poly(2-ethyl-6-propyl-1,4-phenylene) ether; and the like.

The most preferred polyphenylene ether resin for purposes of the present invention is poly(2,6-dimethyl-1,4-phenylene)ether.

The polyphenylene ether resins useful in the compositions of this invention can be prepared by following known procedures, including those described by Allan Hay in U.S. Patent Nos. 3,306,874 and 3,306,875 and by Gelu Stamatoff in U.S. Patent Nos. 3,257,357 and 3,257,358.

The organic phosphate, component (b)(ii) of the flame retardant agent, can be a compound having the formula

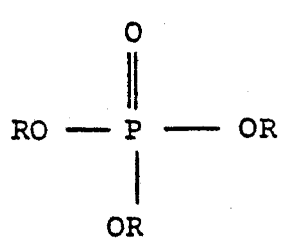

where R is the same or different and is alkyl, cycloalkyl, aryl, alkyl substituted aryl, halogen substituted aryl, aryl substituted alkyl, halogen, or a combination of any of the foregoing, provided at least one R is aryl.

Examples include phenyl bisdodecyl phosphate, phenylbisneopentyl phosphate, phenyl-bis(3,5,5'-trimethylhexyl phosphate), ethyldiphenyl phosphate, 2-ethylhexyldi(p-tolyl) phosphate, bis-(2-ethylhexyl)p-tolylphosphate, tritolyl phosphate, bis-(2-ethylhexyl) phenyl phosphate, tri-(nonylphenyl) phosphate, di(dodecyl)p-tolyl phosphate, tri-cresyl phosphate, triphenyl phosphate, dibutylphenyl phosphate, 2-chloroethyldiphenyl phosphate, p-tolyl bis(2,5,5'-trimethylhexyl)phosphate, 2-ethylhexyldiphenyl phosphate, and the like. The preferred phosphates are those in which each R is aryl. Especially preferred is triphenyl phosphate, which may be either unsubstituted or substituted, for example, isopropylated triphenyl phosphate.

Alternatively, the aromatic phosphate can be a di- or polyfunctional compound or polymer having the formula

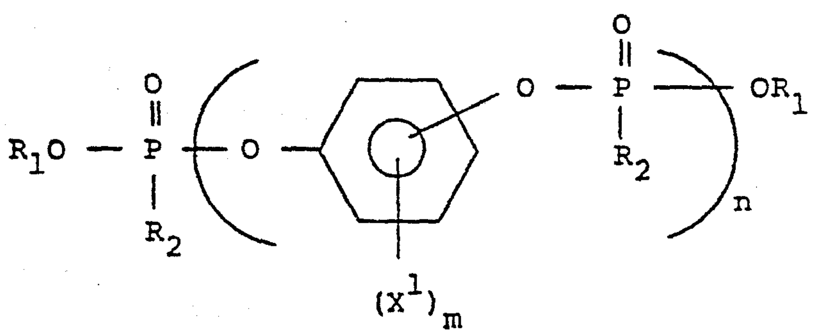
,

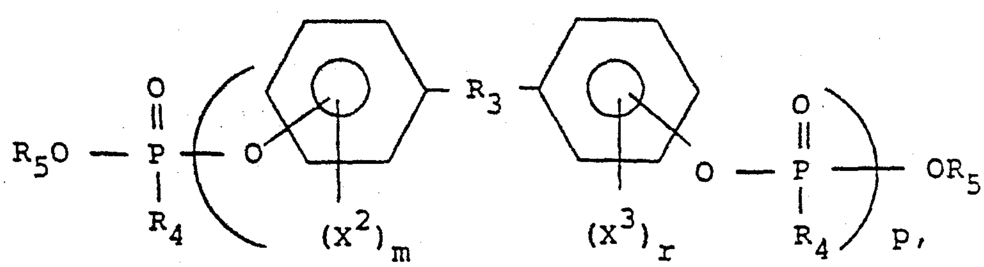
or

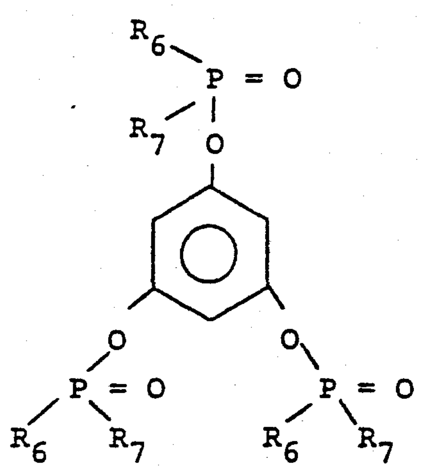

and mixtures thereof, wherein $R_1$, $R_3$ and $R_5$ are, independently, hydrocarbon; $R_2$, $R_4$, $R_6$ and $R_7$ are, independently, hydrocarbon or hydrocarbonoxy; $X^1$, $X^2$ and $X^3$ are halogen; m and r are 0 or integers from 1 to 4, and n and p are from 1 to 30.

Examples include the bis diphenyl phosphates of resorcinol, hydroquinone or bisphenol-A, respectively, or their polymeric higher molecular weight counterparts.

These phosphates and methods of their preparation are described in British Patent No. 2,043,083.

In preferred embodiments, the polyphenylene ether resin is present in amounts equivalent to or greater than the organic phosphate compound, and especially in a weight ratio of polyphenylene ether:organic phosphate of between 1:1 and 20:1.

In general, components (b)(i) and (b)(ii) are supplied in amounts sufficient to provide between about 5 and about 70 parts by weight of the former and between about 1 and about 20 parts by weight of the latter, based on 100 parts of resin in the composition, i.e., the polyester and polyphenylene ether resins combined.

Small amounts of a stable brominated material can further enhance the flame retardancy of the present compositions. This material should be reasonably stable at elevated temperatures above 100°C., and relatively nonvolatile, e.g., having a low volatility at temperatures of 100 to 150°C.

The stable brominated material can be a compound of the formula

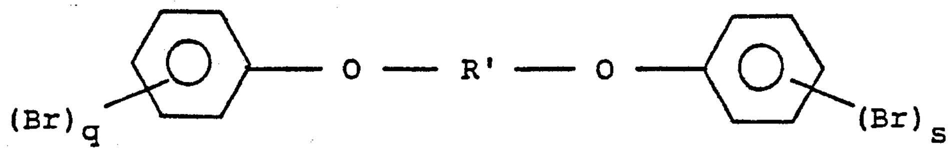

where R' is alkylene, straight or branched, having from 1 to 10 carbon atoms, and more preferably from 1 to about 6 carbon atoms; and q and s represent the total number of bromine atoms on each ring and are independently integers from 1 to 5.

Amounts of between about 1 and about 20 parts by weight, based on 100 parts of total resins, are normally sufficient to decrease the average quenching time and/or to retard the tendency of the composition to drip molten resin, and such amounts are preferred.

Examples of bis-phenoxy compounds useful in the practice of this invention are 1,2-bis(2,4,6-tribromophenoxy)ethane; 1,3-bis(2,4,6-tribromophenoxy)propane; 1,4-bis(2,4,6-tribromophenoxy) butane; and 2,2-bis(4-bromophenoxy)propane. Preferred are 1,2-bis(2,4,6-tribromophenoxy) ethane and 1,2-bis(2,3,4,5,6-pentabromophenoxy)ethane.

The above compounds are available commercially or can be made by following known procedures, such as those which are described by Arnold Anderson in U.S. Patent No. 4,016,138. By way of illustration, the bis-phenoxy compound may be prepared by reacting a halogenated phenolic with a halogenated alkane in the presence of a base at a temperature of from 40 to 200°C. Suitable bases include alkali metal hydroxides, e.g., sodium or potassium hydroxide, carbonates, bicarbonates, oxides and hydrides. The reaction can be conducted in an organic

solvent, such as a ketone or alcohol, or in an aqueous solvent, such as water or a mixture of water and alcohol or water and a ketone. The bis-phenoxy compound is recovered by conventional methods such as distillation or crystallization and can be purified by standard techniques.

Also useful as component (b)(iii) are flame retardant brominated polymers, including those which are described in U.S. Patent No. 3,334,154 (Kim) and U.S. Patent No. 3,833,685 (Wambach). Preferably, these are aromatic carbonate copolymers having units of the formula

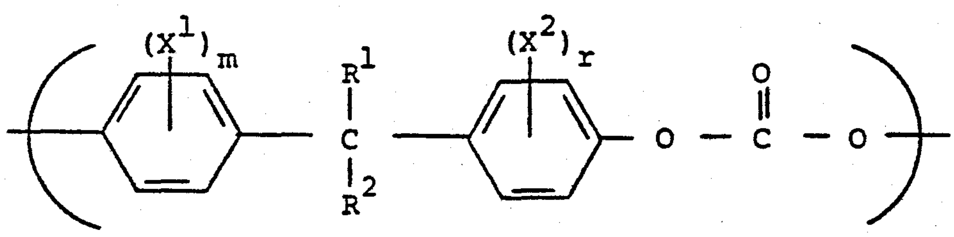

in which $R^1$ and $R^2$ are hydrogen, (lower) alkyl or phenyl, $X^1$ and $X^2$ are bromo or chloro, and m and r are from 1 to 4, and units of the formula:

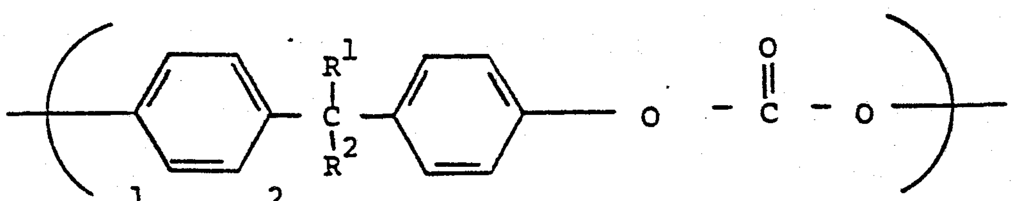

in which $R^1$ and $R^2$ are as defined above.

Especially preferred are oligomeric tetrabromobisphenol-A polycarbonates chain stopped with tribromophenol.

The present compositions can also be formulated to include one or more additives of the kind which are conventional for thermoplastic polyester resins and blends to facilitate processing or to improve the chemical and physical properties of the processed articles. The additives can be selected from among, for instance, mold

release agents, plasticizers, anti-oxidants, stabilizers, mineral fillers (e.g., clay), pigments, dyes and so forth. These are normally added in minor but effective amounts ranging from about 1% up to about 50% by weight, or more, of the total composition.

For other property modification, it may be helpful to add a modifying polymer selected from among polymers having elastomeric properties. These may be co- or terpolymers of an elastomeric material, such as polybutadiene, polyisoprene or other rubbery polyolefin. Examples include polystyrene-polybutadiene block copolymers, polystyrene-polyisoprene block copolymers, polystyrene-polybutadiene-polystyrene block copolymers, polystyrene-polyethylene/polybutylene-polystyrene block copolymers, and so forth.

Preparation of the compositions may be accomplished by milling the ingredients at a temperature in the range between 440 to 460°F. (227 to 238°C.), and molding the milled material at a temperature of 440 to 550°F. (227 to 260°C). Other methods of preparation are possible, however, as shown in some of the examples.

DESCRIPTION OF THE SPECIFIC EMBODIMENTS

The following examples illustrate the invention. They are intended to show preferred or best embodiments and should not be construed as a limitation on the scope of the invention.

EXAMPLES 1-4

The compositions noted below were prepared by compounding the ingredients on a two-roll mill at a temperature of 440-455°F. (227-235°C.), and molding the resultant milled material at a temperature of 450°F. (232°C.) for ten minutes. The moldings were evaluated for flame retardancy using a vertical flame test. The results are shown in Table 1.

TABLE 1

| EXAMPLE<br>INGREDIENTS, PARTS BY WEIGHT | 1 | 2 | 3 | 4 |
|---|---|---|---|---|
| Poly(1,4-butylene terephthalate) | 100 | 60 | 60 | 60 |
| Poly(2,6-dimethyl-1,4-phenylene ether) resin | -- | 40 | 40 | 40 |
| Isopropylated triphenyl phosphate | -- | -- | 10 | 10 |
| 1,2-bis(2,4,6-tribromophenoxy) ethane | -- | -- | -- | 4 |
| Vertical Burn Test (1/8 inch thick specimen, or 3/10 centimeter) | | | | |
| Drip Characteristics | D,D | ND,ND | ND,ND | ND,ND |
| Seconds to quench | | | | |
| 1st ignition | >30,>30 | >30,>30 | >30,>30 | 5,2 |
| 2nd ignition | --, -- | --, -- | --, -- | >30,>30 |

D = Drip

ND = No drip

0133641

EXAMPLES 5-8

The ingredients were milled (two roll mill) at about 440°F. (227°C.), and pressed between platens at 440°F. (227°C.), for 10 minutes. The results are reported in Table II. As can be seen the flame retardancy characteristics as represented by the resistance to dripping and the self-extinguishing times were good.

TABLE II

| EXAMPLE | | | | |
|---|---|---|---|---|
| INGREDIENTS, PARTS BY WEIGHT | 5 | 6 | 7 | 8 |
| Poly(ethylene terephthalate) | 80 | -- | 70 | -- |
| Poly(1,4-butylene terephthalate) | -- | 80 | -- | 70 |
| Poly(2,6-dimethyl-1,4-phenylene ether) resin | 20 | 20 | 30 | 30 |
| Isopropylated triphenyl phosphate | 12 | 12 | 12 | 12 |
| 1,2-bis(2,4,6-tribromophenoxy) ethane | 4 | 4 | 4 | 4 |
| Vertical Burn Test (1/8" thick specimen, or 3/10 cm ) | | | | |
| Drip characteristics | ND,ND,ND | ND,ND,ND | ND,ND,ND | ND,ND,ND |
| Seconds to quench | | | | |
| 1st ignition | 0,0,0 | 0,0,0 | 0,0,0 | 0,0,0 |
| 2nd ignition | >30,>30,>30 | 1,3,2 | 10,16,13 | 0,0,0 |

ND = No Drip

EXAMPLE 9

An additional composition in accordance with the invention, this time containing antimony oxide synergistic agent, was prepared by milling the ingredients at 460°F. (238°C.) and compression molding at 500°F. (260°C). The test results are shown below in Table III.

TABLE III

| INGREDIENTS, PARTS BY WEIGHT | |
|---|---|
| Poly(1,4-butylene terephthalate) | 30 |
| Poly(2,6-dimethyl-1,4-phenylene ether) resin | 70 |
| Isopropylated triphenyl phosphate | 10 |
| 1,2-bis(2,4,6-tribromophenoxy) ethane | 5 |
| Antimony oxide | 2 |
| | |
| V-Burn Test, 1/8" (3/10 cm.) | |
| Drip characteristics | ND,ND |
| Seconds to quench | |
| 1st ignition | 1,1 |
| 2nd ignition | 1,1 |

EXAMPLES 10-15

The compositions noted below were prepared by milling the ingredients on a roll mill at 460°F.(238°C.) and molding for ten minutes at 500°F. (260°C). The results are shown in the Table.

In Examples 10, 11 and 12, the poly(2,6-dimethyl-1,4-phenylene ether) resin and isopropylated triphenyl phosphate were pre-extruded at 500-600°F. (260-316°C.). In Examples 13 and 14, the poly(2,6-dimethyl-1,4-phenylene ether) resin and bis phenyl phosphate of resorcinol were pre-extruded at 490-570°F. (254-299°C.). In Example 15, the poly(2,6-dimethyl-1,4-phenylene ether) resin was pre-extruded with 5 parts of bis phenyl phosphate of resorcinol at 490-570°F. (254-299°C.).

TABLE IV

| INGREDIENTS, PARTS BY WEIGHT | 10 | 11 | 12 | 13 | 14 | 15 |
|---|---|---|---|---|---|---|
| Poly(1,4-butylene terephthalate) resin | 50 | 50 | 50 | 50 | 50 | 50 |
| Poly(2,6-dimethyl-1,4-phenylene ether) resin | 40 | 40 | 20 | 50 | 50 | 50 |
| Isopropylated triphenyl phosphate | 10 | 10 | 5 | -- | -- | -- |
| Styrene-ethylene/butylene-styrene block copolymer | 10 | 10 | 10 | 20 | 20 | 20 |
| Tetrabromibisphenol-A oligomeric polycarbonate | 10 | 20 | 10 | -- | -- | 30 |
| Bis diphenyl phosphate of resorcinol | -- | 10 | 10 | 10 | 10 | 10 |
| Antimony oxide | -- | -- | 5 | -- | 5 | 5 |

TABLE IV (cont'd.)

| PROPERTIES | 10 | 11 | 12 | 13 | 14 | 15 |
|---|---|---|---|---|---|---|
| Horizontal propagation after 30 seconds | ¼ inch (6/10 cm) | NP | ¼ inch (6/10 cm) | ¼ inch (6/10 cm) | ¼ inch (6/10 cm) | NP |
| Horizontal Burn Test, 1/8 inch (3/10 cm) specimen | ND | ND | ND | ND | ND | ND |
| Vertical Burn Test: | | | | | | |
| Drip Characteristics | ND,ND | ND,ND | ND,ND | -- | -- | ND,ND |
| Seconds to quench | | | | | | |
| 1st ignition | 2,2 | 1,1 | 12,16 | -- | -- | 0,0 |
| 2nd ignition | 4,6 | 1,2 | >30,>30 | -- | -- | 1,1 |

ND = No drip

NP = No propagation

All of the patents and/or publications mentioned above are incorporated herein by reference. Other modifications and variations of the invention are possible in the light of the above disclosure. For instance, instead of poly(1,4-butylene terephthalate) or poly (ethylene terephthalate) individually, mixtures of these two can be employed. Copolyesters can also be substituted for the homopolymeric polyesters shown. Instead of triphenyl phosphate, other organic phosphate flame retardant compounds are possible. In place of 1,2-bis(2,4,6-tribromophenoxy) ethane, one may use 1,2-bis(2,3,4,5,6-pentabromophenoxy) ethane.

Optionally, the compositions can and often do also contain an additional compound selected from among those known to synergistically enhance the flame retardancy effect of brominated compounds, such as synergistic agents based on antimony or molybdenum. Particular mention is made of antimony oxide, as shown above. Small amounts of less than 10% by weight, for example, are usually sufficient to improve the performance of the brominated compound and upgrade the flame retardancy overall.

It is to be understood, therefore, that changes can be made in the particular embodiments shown which are still within the full intended scope of the invention defined in the appended claims.

CLAIMS

1. A thermoplastic composition comprising an admixture of:

(a) a normally flammable thermoplastic linear polyester resin; and

(b) an effective amount of a flame retardant agent which comprises (i) a polyphenylene ether resin, (ii) an organic phosphate, and (iii) a stable brominated material.

2. A composition according to Claim 1, in which component (a) is a polymeric glycol terephthalate or isophthalate having repeating units of the formula

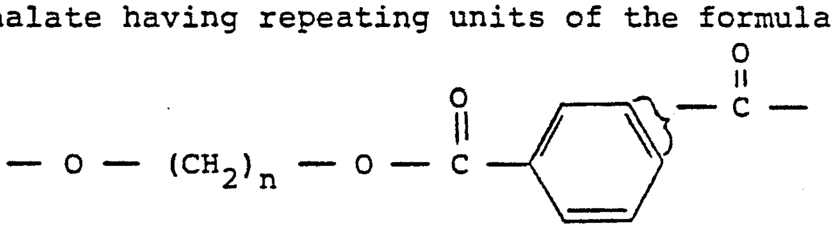

where n is a whole number of from two to ten.

3. A composition according to Claim 1, in which component (a) is poly(1,4-butylene terephthalate) resin.

4. A composition according to Claim 1, in which component (a) is poly(ethylene terephthalate) resin.

5. A composition according to Claim 1, in which the polyester, component (a), has an intrinsic viscosity in the range between about 0.2 and about 1.5 deciliters per gram measured in solution in ortho-chlorophenol or a 60:40 mixture of phenol/tetrachloroethane at 25° to 30°C.

6. A composition according to Claim 1, in which the polyphenylene ether resin, component (b)(i), has the formula

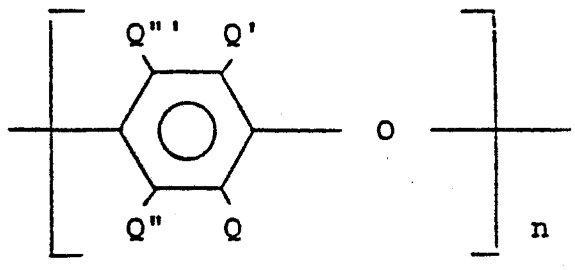

wherein Q, Q', Q" and Q"', are independently selected from the group consisting of hydrogen, halogen, hydrocarbon radicals, halohydrocarbon radicals, hydrocarbonoxy radicals, and halohydrocarbonoxy radicals; and n represents the total number of monomer units and is an integer at least about 20.

7. A composition according to Claim 1, in which component (b)(i) is poly(2,6-dimethyl-1,4-phenylene) ether.

8. A composition according to Claim 1, in which the organic phosphate, component (b)(ii), is a compound having the formula

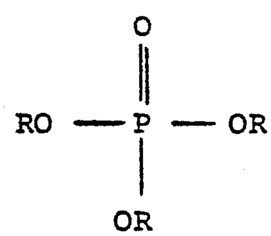

where R is the same or different and is alkyl, cycloalkyl, aryl, alkyl substituted aryl, halogen substituted aryl, aryl substituted alkyl, halogen, or a combination of any of the foregoing, provided at least one R is aryl.

9. A composition according to Claim 1, in which component (b)(ii) is triphenyl phosphate.

10. A composition according to Claim 9, in which the triphenyl phosphate is isopropylated.

11. A composition according to Claim 1, in which component (b)(ii) is a di- or polyfunctional compound or polymer having the formula

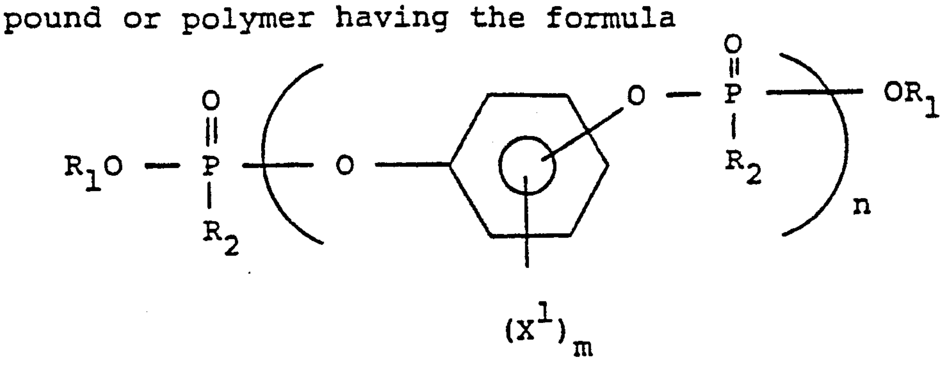

,

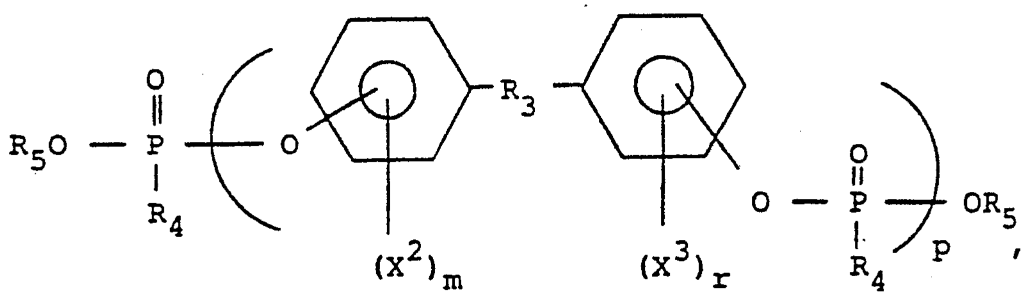

, or

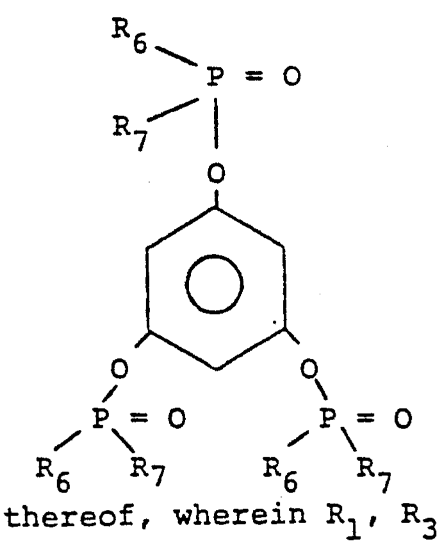

and mixtures thereof, wherein $R_1$, $R_3$ and $R_5$ are, independently, hydrocarbon; $R_2$, $R_4$, $R_6$ and $R_7$ are, independently, hydrocarbon or hydrocarbonoxy; $X^1$, $X^2$ and $X^3$ are halogen; m and r are 0 or integers from 1 to 4, and n and p are from 1 to 30.

12. A composition according to Claim 11, in which (b)(ii) is bis diphenyl phosphate of resorcinol.

13. A composition according to Claim 11, in which (b)(ii) is bis diphenyl phosphate of hydroquinone.

14. A composition according to Claim 11, in which (b)(ii) is bis diphenyl phosphate of bisphenol-A.

15. A composition according to Claim 1, in which component (b)(iii) is a compound having the formula

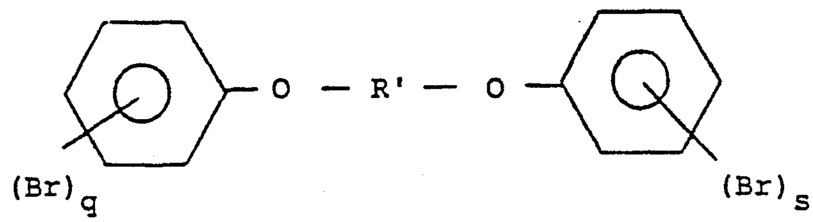

where R' is alkylene, straight or branched, having from 1 to 10 carbon atoms; and q and s represent the total number of bromine atoms on each ring and are independently integers from 1 to 5.

16. A composition according to Claim 1, in which component (b)(iii) is 1,2-bis(2,4,6-tribromophenoxy) ethane.

17. A composition according to Claim 1, in which component (b)(iii) is 1,2-bis(2,3,4,5,6-pentabromo-phenoxy)ethane.

18. A composition according to Claim 1, in which component (b)(iii) is an aromatic carbonate copolymer having units of the formula

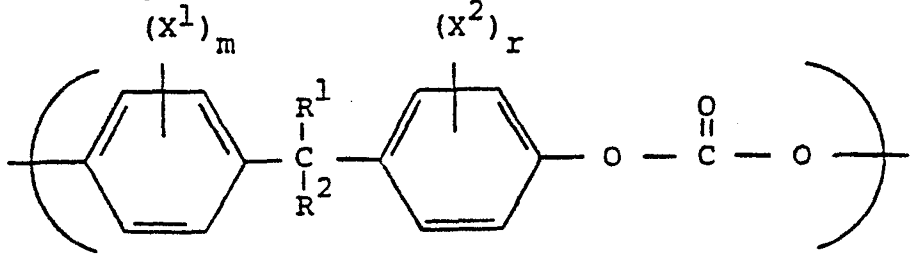

in which $R^1$ and $R^2$ are hydrogen, (lower) alkyl or phenyl, $X^1$ and $X^2$ are bromo or chloro, and m and r are from 1 to 4, and units of the formula:

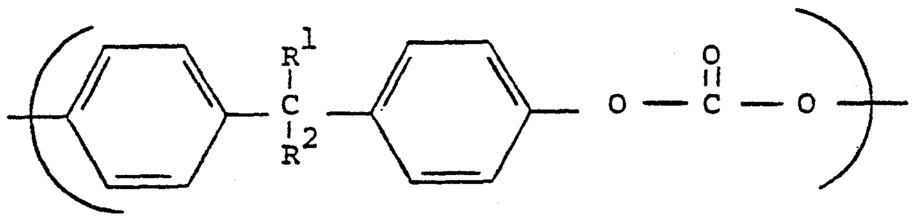

in which $R^1$ and $R^2$ are as defined above.

19. A composition according to Claim 18, in which (b)(iii) is a tetrabromobisphenol-A oligomeric polycarbonate.

20. A composition according to Claim 1, in which the weight ratio of (b)(i) to (b)(ii) is between 1:1 and 20:1.

21. A composition according to Claim 1, which comprises from about 5 to about 70 parts by weight of (b)(i), from about 1 to about 20 parts by weight of (b)(ii), and from about 1 to about 20 parts by weight of (b)(iii), based on 100 parts of (a) and (b)(i) combined.

22. A composition according to Claim 1, which also includes a synergistic agent for (b)(iii).

23. A composition according to Claim 22, in which the synergistic agent is an antimony compound.

24. A composition according to Claim 23, in which the antimony compound is antimony oxide.

25. A composition according to Claim 1, which includes a modifying elastomeric polymer.

26. A composition according to Claim 25, in which the modifying elastomeric polymer is a styrenebutadiene-styrene block copolymer.

27. A composition according to Claim 25, in which the modifying elastomeric polymer is a styrene-ethylene/butylene-styrene block copolymer.

28. A composition according to Claim 25, in which the modifying elastomeric polymer is a styreneisoprene-styrene block copolymer.

29. A composition according to Claim 1, which also includes a filler.

European Patent Office

**EUROPEAN SEARCH REPORT**

0133641

EP 84 10 6956

**DOCUMENTS CONSIDERED TO BE RELEVANT**

| Category | Citation of document with indication, where appropriate, of relevant passages | Relevant to claim | CLASSIFICATION OF THE APPLICATION (Int Cl 3) |
|---|---|---|---|
| D,A | US-A-4 013 613 (V. ABOLINS et al.)<br>* Claims 1, 7; column 4, lines 22-66; column 6, line 37 - column 8, line 36 *<br>--- | 1-10, 25-29 | C 08 L 67/02<br>C 08 L 71/04<br>C 08 K 5/10<br>C 08 K 5/52<br>C 08 L 69/00<br>C 08 L 53/02 |
| A | US-A-3 819 759 (J.C. WEAVER et al.)<br>* Column 1, lines 14-25; column 2, lines 9-34 *<br>--- | 1,6-8, 18 | |
| A | US-A-4 123 410 (G.F. LEE)<br>* Column 1, line 56 - column 5, line 10; column 6, lines 40-41 *<br>--- | 1-3,5-10,25-29 | |
| D,A | US-A-4 344 878 (T.J. DOLCE)<br>* Claim 1; column 4, lines 43-61; column 5, lines 14-44 *<br>--- | 1,18-24 | TECHNICAL FIELDS SEARCHED (Int. Cl. 3)<br>C 08 L 67/02<br>C 08 L 71/04 |
| A | AU-B- 518 257 (VELSICOL CHEMICAL CORP.)<br>* Claim 1, page 9, lines 25-28; page 11, lines 1-2 *<br>--- | 1-3,6, 8,9 | |
| A | FR-A-2 451 386 (GENERAL ELECTRIC COMPANY)<br>* Page 2, line 20 - page 5, line 9 *<br>--- -/- | 1,6-8, 11-14 | |

The present search report has been drawn up for all claims

| Place of search | Date of completion of the search | Examiner |
|---|---|---|
| BERLIN | 07-09-1984 | IDEZ C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

0133641

European Patent Office

# EUROPEAN SEARCH REPORT

Application number

EP 84 10 6956



## DOCUMENTS CONSIDERED TO BE RELEVANT

| Category | Citation of document with indication where appropriate, of relevant passages | Relevant to claim | CLASSIFICATION OF THE APPLICATION (Int Cl 3) |
|---|---|---|---|
| A | US-A-3 850 879 (A.L. ANDERSON)<br>* Claim 1 *<br>----- | 1,15-17 | |

TECHNICAL FIELDS SEARCHED (Int Cl 3)

The present search report has been drawn up for all claims

| Place of search | Date of completion of the search | Examiner |
|---|---|---|
| BERLIN | 07-09-1984 | IDEZ C.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82